# EUROPEAN PATENT SPECIFICATION

(11) **EP 4 414 869 B1**
(45) Date of publication and mention of the grant of the patent: **27.08.2025**
(21) Application number: 24185029.6
(22) Date of filing: 30.11.2020
(51) Int. Cl.: G06F 21/44

(54) **ELECTRONIC COMMUNICATION DEVICE AND ELECTRONIC COMMUNICATION SYSTEM**
ELEKTRONISCHES KOMMUNIKATIONSGERÄT UND ELEKTRONISCHES KOMMUNIKATIONSSYSTEM
DISPOSITIF DE COMMUNICATION ÉLECTRONIQUE ET SYSTÈME DE COMMUNICATION ÉLECTRONIQUE

(43) Date of publication of application: 14.08.2024
(62) Divisional of application: 20210804.9
(73) Proprietor: Rohde & Schwarz GmbH & Co. KG, 81671 München (DE)
(72) Inventor: Wenzel, Dietmar, 81671 München (DE); Herler, Christian, 81671 München (DE); Nothacker, Stephan, 81671 München (DE); Koehler, Hendrik, 81671 München (DE)
(74) Representative: Novagraaf Group

(56) References cited:
- CN-U- 210 053 412
- US-A1- 2006 019 655
- US-A1- 2013 080 753
- US-A1- 2020 186 428

## Description

### Electronic communication device and electronic communication system

The invention generally relates to an electronic communication device for radio communication. The invention further relates to an electronic communication system.

Certain types of electronic communication devices, for example handheld radios, can be operated with one or several connected external electronic components, such as antennas, amplifiers, etc. Usually, these external components are connected to the electronic communication device by means of a cable.

As different external components require different operational parameters to be set in the electronic communication device, the operational parameters of the electronic communication device have to be adapted each time a different external component is connected to the electronic communication device.

Usually, a user of the electronic communication device needs to set these operational parameters by hand in order to ensure a correct functionality of the electronic communication device in combination with the respective external component.

However, this requires a considerable amount of expertise from the user, as the user needs to know the correct operational parameters for every external electronic component used with the electronic communication device. Moreover, setting the correct operational parameters may be a rather time-consuming task.

Documents US2006/019655 A1 and US2020/186428 A1 constitute relevant prior art.

Thus, the object of the present invention is to provide an electronic communication device that can be operated in combination with different external electrical components in an easier manner.

According to the invention, the problem is solved by an electronic communication device for radio communication according to the appended claim 1. The electronic communication device comprises a control module and a connector interface. The connector interface is configured to be connected to at least one external electronic device associated with an identification chip with configuration information and/or identification information. The connector interface comprises an information signal line being configured to receive the configuration information and/or identification information. The connector interface is configured to forward the configuration information and/or identification information received to the control module. The control module is configured to evaluate the configuration information and/or the identification information received. The control module is configured to set communication parameters of the electronic communication device automatically based on the configuration information and/or the identification information evaluated.

The present invention is based on the idea to provide all information necessary for setting the communication parameters of the electronic communication device, i.e. the configuration information and/or the identification information, by means of the identification chip.

The configuration information is associated with the communication parameters of the electronic communication device that need to be set in order to ensure the correct functionality of the electronic communication device in combination with the external electronic device. In other words, the configuration information may comprise the communication parameters of the electronic communication device or instructions for the control module to set the correct communication parameters.

The identification information is associated with the particular type and/or model of the external electronic device, wherein the identification information allows for an unambiguous identification of the type and/or model of the external electronic device. Each type and/or model of the external electronic device may be associated with a unique set of communication parameters. Thus, identifying the type and/or model of the external electronic device allows for setting the correct communication parameters.

The electronic communication device or rather the control module receives the identification information and/or the configuration information from the identification chip via the information signal line, evaluates the identification information and/or the configuration information, and automatically sets the communication parameters of the electronic communication device.

Accordingly, there is no need for a user to manually adjust the operational parameters of the electronic communication device, i.e. the communication parameters, by hand. Instead, the communication parameters are set automatically.

Thus, the amount of expertise required from a user of the electronic communication device and the time needed for setting the correct communication parameters is significantly reduced.

The identification chip may comprise the identification information only. Accordingly, the configuration information associated with the respective different types and/or models of external electronic components may be stored in the control module. Thus, the control module may identify the external electronic component, and may set the communication parameters of the electronic communication device accordingly based on the internally stored configuration information.

Alternatively, the identification chip may comprise the configuration information only. Accordingly, the identification chip comprises the communication parameters of the electronic communication device that need to be set or instructions for the control module to set the communication parameters correctly.

It is also conceivable that the identification chip comprises a portion of the configuration information, while the control module comprises a remaining portion of the configuration information. In other words, the configuration information may be split up between the identification chip and the control module.

Alternatively, the identification chip may comprise both the configuration information and the identification information. Thus, the control module may identify the external electronic component based on the identification information and may set the communication parameters based on the identification information and the configuration information saved on the identification chip.

The identification chip may be arranged on or in a cable connecting the external electronic device with the electronic communication device. Particularly, the identification chip may be arranged on or in a cable-side connector, wherein the cable-side connector is configured to connect the cable to the connector interface of the electronic communication device.

Alternatively, the identification chip may be arranged in the external electronic device, particularly in a housing of the external electronic device.

Particularly, the information signal line may be a dedicated signal line that is used by the electronic communication device only for communication with the identification chip. Thus, information received by means of the information signal line exclusively relates to the identity of the external electronic device and/or to the communication parameters being associated with the external electronic device.

According to an aspect of the present invention, the electronic communication device is established as a handheld radio. The handheld radio may be mountable to clothing and/or gear of a user. Alternatively or additionally, the handheld radio may be connectable with a stationary docking station, for example a docking station in a vehicle.

According to another aspect of the present invention, the connector interface comprises an additional reference connection, wherein the additional reference connection provides a potential reference for the information signal line. More precisely, the reference connection has a predefined potential, such that a consistent reference potential is provided. Particularly, the reference connection may be established as a mass reference.

In an embodiment of the present invention, the control module comprises an artificial intelligence module, wherein the artificial intelligence module is configured to determine the communication parameters based on the configuration information and/or identification information. In general, the artificial intelligence module may employ any kind of suitable algorithm in order to determine the communication parameters. For example, the artificial intelligence module may comprise a lookup table. The artificial intelligence module may compare the received configuration information and/or identification information with the lookup table in order to determine the communication parameters.

Particularly, the artificial intelligence module may comprise a machine-learning module that is trained to determine the communication parameters based on the received configuration information and/or identification information.

In a further embodiment of the present invention, the control module comprises a memory, wherein the configuration information being associated with the external electronic device is stored in the memory at least partially, particularly completely. Accordingly, the configuration information may be stored centrally in the memory of the control module. Thus, the communication parameters associated with the external electronic device can easily be adapted, if necessary, by updating the configuration information stored in the memory.

Particularly, the configuration information and/or the identification information is static. In other words, the configuration information and/or the identification information does not change over time. Instead, there is a unique correlation between the configuration information, the identification information and the communication parameters. More precisely, there may be a specific set of configuration information and/or identification information for each type of cable and/or for each type of external electronic device.

According to an aspect of the present invention, the configuration information and/or the identification information is digital. Accordingly, the configuration information and/or the identification information may be saved within a predefined memory portion having a predetermined number of bits. The number of bits may be optimized such that all necessary information can be stored, but there is no or little unused excess memory. For example, the memory of the identification chip may have between 512 and 8192 bits, particularly 4096 bits.

Of course, smaller or larger memories up to several megabytes are also conceivable.

According to another aspect of the present invention, the configuration information comprises a communication protocol, an amplification factor, a voltage requirement, logical parameters, a microphone gain, a speaker gain, an internal speaker state, a push-to-talk setting, a USB setting and/or a last state of use.

In general, the individual parameters of the configuration information may relate to internal settings of the electronic communication device or to settings of the external electronic device.

The speaker state may relate to an on-state or to an off-state of an internal speaker of the electronic communication device or of the external electronic device.

The communication protocol may be the MAXIM 1-Wire Interface protocol or any other suitable communication protocol.

The configuration information and/or the identification information may be saved on the identification chip in the Java Script Object Notation (JSON) format. The JSON format uses human-readable text in order to store and transmit information. Accordingly, the identification information and/or the configuration information is easily understandable by a user. This is particularly advantageous if the user wants to verify or modify the identification information and/or the configuration information stored on the identification chip.

In an embodiment of the present invention, the configuration information and/or the identification information is at least partially saved in clear text. In other words, at least part of the configuration information and/or the identification information may be saved without prior encryption, such that configuration information and/or the identification information are/is easily accessible.

In a further embodiment of the present invention, the security-relevant configuration information and/or security-relevant identification information are/is stored in a dedicated memory portion of a memory of the identification chip. Particularly, the security-relevant configuration information and/or the security-relevant identification information may be encrypted. Alternatively or additionally, the dedicated memory portion may be access-restricted, such that only a user having access rights may be able to access the information in the dedicated memory portion.

According to a further aspect of the present invention, the configuration information and/or the identification information are/is validated by means of a check sum and/or by means of an electronic signature. This way, the correctness and/or the authenticity of the configuration information and/or the identification information can be verified by the control module.

In general, the information signal line may be established as a bidirectional signal line, such that information necessary for transmitting the configuration information and/or the identification information can be exchanged between the control module and the identification chip. For example, address information may be exchanged between the control module and the identification chip by means of the bidirectional signal line.

Particularly, the control module is configured to write configuration information and/or identification information onto the identification chip. Thus, a user may modify the configuration information and/or the identification information on the identification chip, for example if modifications to the communication parameters being associated with an external electronic device are necessary.

According to the invention, the problem further is solved by an electronic communication system. The electronic communication system comprises an electronic communication device described above, and an external electronic device being connected to the connector interface of the electronic communication device by means of at least one cable. The at least one cable and/or the external device comprises an identification chip. The identification chip comprises configuration information and/or identification information being associated with the external electronic device.

Regarding the advantages and further properties of the electronic communication system, reference is made to the explanations given above with respect to the electronic communication device, which also hold for the electronic communication system and vice versa.

The external electronic component may be established as an EUD remote control, as a PPT switch, as an external antenna, as an external loudspeaker, as an external receiver, as an external transmitter, as a GPS device, as an external amplifier, as a headset, as a handset, as a data terminal, as a docking station, as a microphone, etc.

According to an aspect of the present invention, the electronic communication device is the only master device. Accordingly, the electronic communication device is responsible for setting all communication parameters of the electronic communication system, while the at least one external electronic component is operated based on the communication parameters set by the electronic communication device.

The foregoing aspects and many of the attendant advantages of the claimed subject matter will become more readily appreciated as the same become better understood by reference to the following detailed description, when taken in conjunction with the accompanying drawings, wherein:
- Figure 1 schematically shows an electronic communication system according to the present invention;
- Figure 2 schematically shows a second variant of an electronic communication system according to the present invention;
- Figure 3 schematically shows a third variant of an electronic communication system according to the present invention;
- Figure 4 schematically shows a fourth variant of an electronic communication system according to the present invention;
- Figure 5 schematically shows a fifth variant of an electronic communication system according to the present invention; and
- Figure 6 schematically shows a sixth variant of an electronic communication system according to the present invention.

The detailed description set forth below in connection with the appended drawings, where like numerals reference like elements, is intended as a description of various embodiments of the disclosed subject matter and is not intended to represent the only embodiments. Each embodiment described in this disclosure is provided merely as an example or illustration and should not be construed as preferred or advantageous over other embodiments. The illustrative examples provided herein are not intended to be exhaustive or to limit the claimed subject matter to the precise forms disclosed.

For the purposes of the present disclosure, the phrase "at least one of A, B, and C", for example, means (A), (B), (C), (A and B), (A and C), (B and C), or (A, B, and C), including all further possible permutations when more than three elements are listed. In other words, the term "at least one of A and B" generally means "A and/or B", namely "A" alone, "B" alone or "A and B".

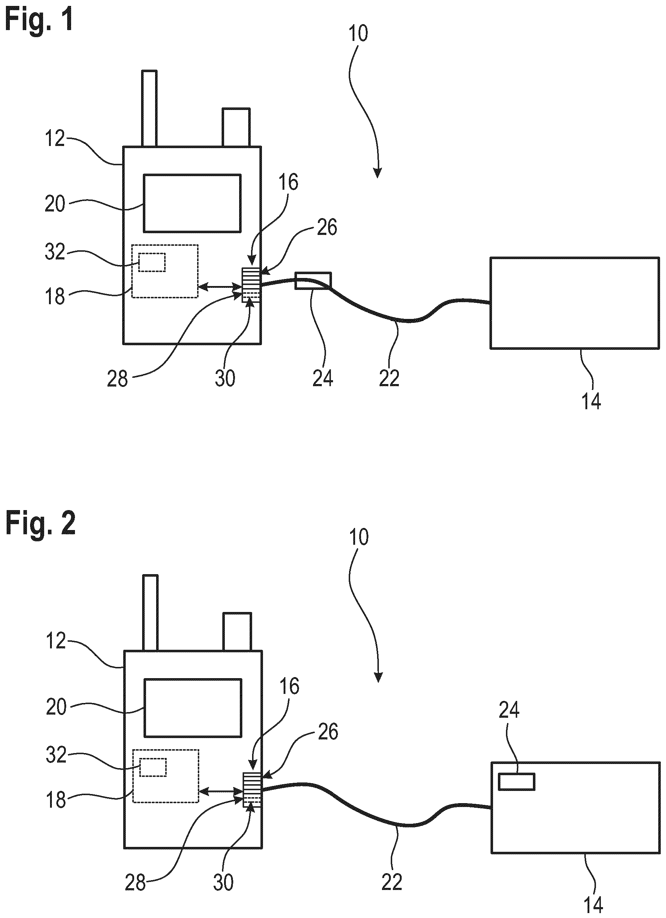

Figure 1 schematically shows an electronic communication system 10 comprising an electronic communication device 12 and an external electronic device 14.

The electronic communication device 12 is established as a handheld radio for wireless communication. Particularly, the electronic communication device 12 is established as a software-defined handheld radio.

The electronic communication device 12 may be mountable to clothing and/or gear of a user, or to a stationary docking station, for example a docking station in a vehicle.

The external electronic device 14 may be established as an EUD remote control, as a PPT switch, as an external antenna, as an external loudspeaker, as an external receiver, as an external transmitter, as a GPS device, as an external amplifier, as a headset, as a handset, as a data terminal, as a docking station, or as a microphone, etc.

The electronic communication device 12 comprises a connector interface 16, and a control module 18. Optionally, the electronic communication device may comprise a display 20.

Therein and in the following, the term "module" is understood to describe suitable hardware, suitable software, or a combination of hardware and software that is configured to have a certain functionality.

The hardware may, inter alia, comprise a CPU, a GPU, an FPGA, an ASIC, or other types of electronic circuitry.

The external electronic device 14 is connected to the connector interface 16 by means of a cable 22.

The cable 22 comprises an identification chip 24. It is noted, that the identification chip is not shown in a correct scale in Figure 1, but is enlarged for illustration purposes.

The connector interface 16 comprises several communication signal lines 26 for communication with the external electronic device 14.

The communication signal lines 26 may each be configured for transmitting data and/or audio between the electron communication device 12 and the external electronic device 14, e.g. via USB, LAN, voice over IP, mass-referenced signaling or differential signaling.

The connector interface 16 further comprises an information signal line 28. The information signal line 28 is a dedicated signal line for communication between the electronic communication device 12 and the identification chip 24, as will be explained in more detail below.

Optionally, the connector interface 16 may comprise an additional reference connection 30. The reference connection 30 has a defined potential, such that the reference connection 30 provides a potential reference for the information signal line 28.

The connector interface 16 and the cable 22 comprise complementing connecting elements, e.g. pins and corresponding jacks, that are configured to connect the communication signal lines 26, the information signal line 28, and the reference connection to corresponding internal wires of the cable 22.

The connector interface 16 is connected to the control module 18 in a signal transmitting manner.

In general, the electronic communication device 12, or rather the control module 18 is configured to automatically set correct communication parameters of the electronic communication device 12 based on corresponding information stored in the identification chip 24.

More precisely, the identification chip comprises configuration information and/or identification information associated with the external electronic device 14.

The configuration information is associated with the communication parameters of the electronic communication device 12 that need to be set in order to ensure the correct functionality of the electronic communication device 12 in combination with the external electronic device 14.

In other words, the configuration information may comprise the communication parameters of the electronic communication device 12 or instructions for the control module 18 to set the correct communication parameters.

In general, the individual parameters of the configuration information may relate to internal settings of the electronic communication device 12 or to settings of the external electronic device 14.

For example, the configuration information comprises a communication protocol to be used for communication between the electronic communication device 12 and the external electronic device 14, an amplification factor needed for amplifying a communication signal received from the external electronic device 14 or a communication signal sent to the external electronic device 14, a voltage requirement (i.e. a needed voltage supply for the external electronic device 14), logical parameters for communication between the external electronic device 14 and the electronic communication device 12, a microphone gain for the external electronic device 14, a speaker gain for the external electronic device 14, an internal speaker state of the external electronic device 14 or the electronic communication device 12, a push-to-talk setting, a USB setting and/or a last state of use for the external electronic device 14 or the electronic communication device 14, particularly a last state of use of the electronic communication device 12 in combination with the external electronic device 14.

The communication protocol may be the MAXIM 1-Wire Interface protocol or any other suitable communication protocol.

The speaker state may relate to an on-state or to an off-state of an internal speaker of the electronic communication device or of the external electronic device.

The identification information is associated with the particular type and/or model of the external electronic device 14, wherein the identification information allows for an unambiguous identification of the type and/or model of the external electronic device 14.

The configuration information and/or the identification information be digital. Accordingly, the identification chip 24 may comprise a memory having a predetermined number of bits, wherein the configuration information and/or the identification information is stored in the memory.

For example, the memory of the identification chip may have between 512 and 8192 bits, particularly 4096 bits.

Of course, the identification chip 24 may also have smaller or larger memories, particularly a memory with a size of several megabytes.

The configuration information and/or the identification information may be saved on the identification chip 24 in the Java Script Object Notation (JSON) format.

Particularly, at least a portion of the configuration information an/or of the identification information may be stored in clear text, i.e. without any encryption.

If there is any security-relevant configuration information and/or identification information, the security-relevant portion of the configuration information and/or identification information may be stored in a dedicated memory portion of the memory of the identification chip 24.

For example, the security-relevant portion of the configuration information and/or identification information stored in the dedicated memory portion may be encrypted.

Alternatively or additionally, the dedicated memory portion may be access-restricted, such that a user needs to have access rights in order to access the security relevant portion of the configuration information and/or identification information.

The identification information and/or the configuration information is forwarded from the identification chip 24 to the control module 18 via the connector interface 16, more precisely via the information signal line 28 of the connector interface 16.

In general, the information signal line 28 may be established as a bidirectional signal line, such that information necessary for transmitting the configuration information and/or the identification information can be exchanged between the control module 18 and the identification chip 24.

For example, address information may be exchanged between the control module 18 and the identification chip 24 by means of the bidirectional signal line.

The control module 18 is configured to evaluate the configuration information and/or the identification information received from the identification chip 24.

The control module 18 may validate the configuration information and/or the identification information by means of a check sum and/or by means of an electronic signature comprised in the configuration information and/or in the identification information.

If the identification chip 24 comprises only the identification information associated with the external electronic device 14, the control module 18 may identify the type and/or the model of the external electronic device 14 based on the identification information.

Each type and/or model of the external electronic device may be associated with a unique set of communication parameters of the electronic communication device 12. Thus, identifying the type and/or model of the external electronic device allows for setting the correct communication parameters.

In this case, the control module 18 may comprise a memory 32, wherein a database of communication parameters associated with different types and/or models of external electronic devices may be stored in the memory.

In other words, the configuration information necessary for setting the correct communication parameters may be stored in the memory 32 together with the respective type and/or model of the external electronic device 14.

Thus, the control module 18 may identify the external electronic device 14, and may set the communication parameters of the electronic communication device 12 accordingly based on the internally stored configuration information.

If the identification chip 24 comprises the configuration information associated with the external electronic device 14, the control module 18 may directly set the corresponding communication parameters of the electronic communication device 12 based on the configuration information.

This is possible, because the configuration information comprises the communication parameters of the electronic communication device 12 that need to be set, or instructions for the control module 18 to set the communication parameters correctly.

It is also conceivable that the identification chip 24 comprises a portion of the configuration information, while the control module 18 or rather the memory 32 comprises a remaining portion of the configuration information.

In general, the control module 18 may employ any suitable algorithm in order to identify the type and/or model of the external electronic device 14, and/or in order to set the correct communication parameters based on the identification information and/or the configuration information.

Particularly, the control module 18 comprises an artificial intelligence module, wherein the artificial intelligence module is configured to determine the communication parameters based on the configuration information and/or the identification information.

For example, the artificial intelligence module may comprise a lookup table, wherein the lookup table may comprise the type and/or model of the external electronic device 14 and the respectively associated communication parameters.

The artificial intelligence module may compare the received configuration information and/or identification information with the lookup table in order to determine the communication parameters.

As a further example, the artificial intelligence module may comprise a machine-learning module that is trained to determine the communication parameters based on the received configuration information and/or identification information.

Summarizing, the electronic communication device 12 described above is configured to automatically set the correct communication parameters for the external electronic device 14 connected to the electronic communication device 12 based on the configuration information and/or identification information received from the identification chip 24.

Optionally, the control module 18 may be configured to modify the configuration information and/or identification information saved on the identification chip 24.

In other words, the information signal line 28 may be established such that the control module 18 can receive the configuration information and/or the identification information from the identification chip 24 and write configuration information and/or the identification information onto the identification chip 24.

Thus, a user may modify the configuration information and/or the identification information on the identification chip 24, for example if modifications to the communication parameters being associated with the external electronic device 14 are necessary.

Figure 2 schematically shows a second variant of the electronic communication system 10. In the following, only the differences to the variant of the electronic communication system 10 described above will be explained, wherein like numerals reference elements having like functionality.

The electronic communication system 10 of Figure 2 differs from the variant of Figure 1 in that the identification chip 24 is arranged in the external electronic device 14 instead of being arranged in the cable 22.

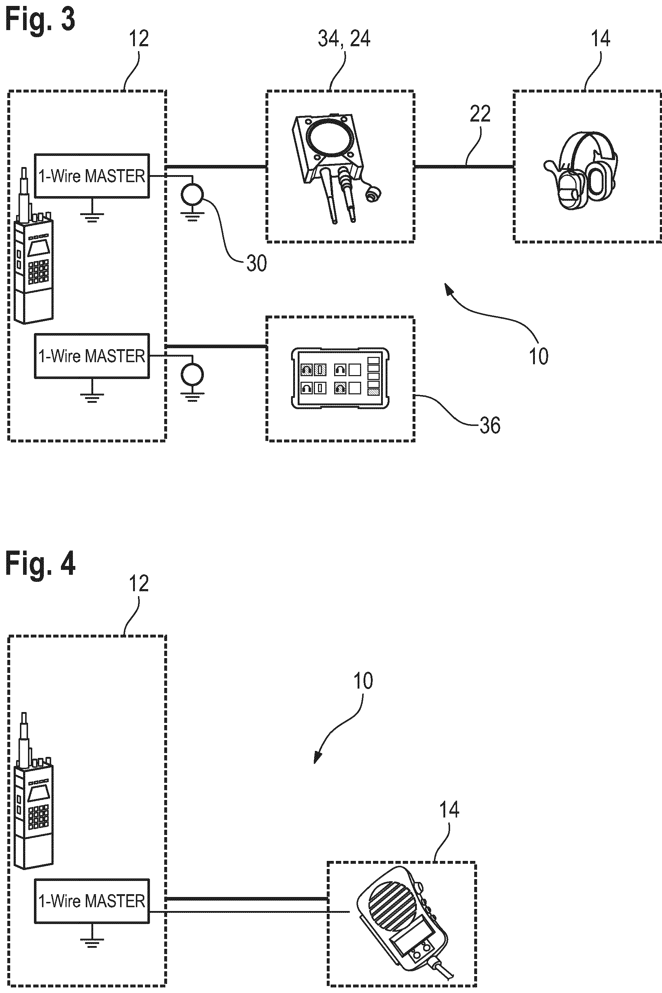

Figure 3 shows a third variant of the electronic communication system 10. The external electronic device 14 is established as a headset, more precisely as a pair of on-ear speakers.

The external electronic device 14 is connected to the electronic communication device 12 or rather to the connector interface 16 by means of a cable-side side connector 34.

The identification chip 24 may be arranged within the cable-side connector 34.

The electronic communication device 12 may further be connected to an external computer device 36. The external computer device 36 may be established as a computer, a laptop, a smart phone, a tablet or as any other type of smart device, or as an EUD remote control.

The external computer device 36 may be configured to adapt internal settings of the electronic communication device 12.

Alternatively or additionally, the external computer device 36 may be used by a user in order to control the electronic communication device 12 and/or the external electronic device 14.

Particularly, the external computer device 36 may be used in order to modify the configuration information and/or the identification information saved on the identification chip 24.

It is noted that the external computer device 36 may also be used in any other variant of the electronic communication device 12 described in the present disclosure.

Figure 4 shows a fourth variant of the electronic communication system 10. In this variant, the external electronic device 14 is established as a handset having a microphone and a loudspeaker.

The identification chip 24 may be arranged within the handset.

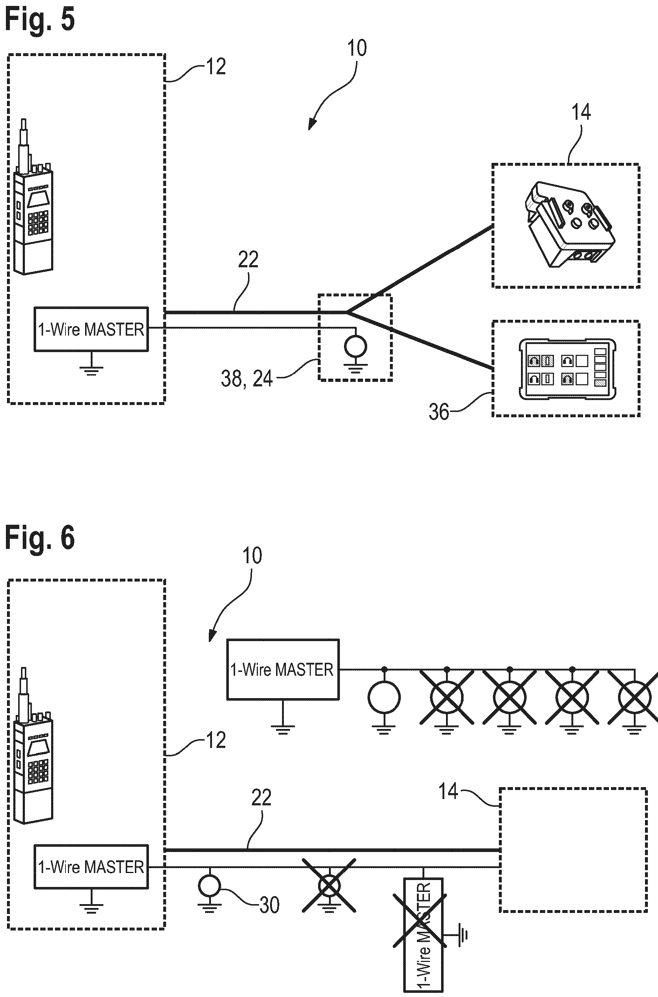

Figure 5 shows a fifth variant of the electronic communication system 10. In this variant, the electronic communication device is connected to the external electronic device 14 and to the external computer device 36 by means of a cable branch box 38.

The identification chip 24 may be arranged within the cable branch box 38.

Figure 6 shows a sixth variant of the electronic communication system 10. As is illustrated there, the electronic communication device 12 may be established as the only master device of the electronic communication system 10.

Accordingly, the electronic communication device 12 is responsible for setting all communication parameters of the electronic communication system 10, while the external electronic device 14 is operated based on the communication parameters set by the electronic communication device 12.

Certain embodiments disclosed herein, particularly the respective module(s), utilize circuitry (e.g., one or more circuits) in order to implement standards, protocols, methodologies or technologies disclosed herein, operably couple two or more components, generate information, process information, analyze information, generate signals, encode/decode signals, convert signals, transmit and/or receive signals, control other devices, etc. Circuitry of any type can be used.

In an embodiment, circuitry includes, among other things, one or more computing devices such as a processor (e.g., a microprocessor), a central processing unit (CPU), a digital signal processor (DSP), an application-specific integrated circuit (ASIC), a field-programmable gate array (FPGA), a system on a chip (SoC), or the like, or any combinations thereof, and can include discrete digital or analog circuit elements or electronics, or combinations thereof. In an embodiment, circuitry includes hardware circuit implementations (e.g., implementations in analog circuitry, implementations in digital circuitry, and the like, and combinations thereof).

In an embodiment, circuitry includes combinations of circuits and computer program products having software or firmware instructions stored on one or more computer readable memories that work together to cause a device to perform one or more protocols, methodologies or technologies described herein. In an embodiment, circuitry includes circuits, such as, for example, microprocessors or portions of microprocessor, that require software, firmware, and the like for operation. In an embodiment, circuitry includes one or more processors or portions thereof and accompanying software, firmware, hardware, and the like.

The present application may reference quantities and numbers. Unless specifically stated, such quantities and numbers are not to be considered restrictive, but exemplary of the possible quantities or numbers associated with the present application. Also in this regard, the present application may use the term "plurality" to reference a quantity or number. In this regard, the term "plurality" is meant to be any number that is more than one, for example, two, three, four, five, etc. The terms "about", "approximately", "near" etc., mean plus or minus 5% of the stated value.

## Claims

1. An electronic communication device for radio communication, wherein the electronic communication device (12) comprises a control module (18) and a connector interface (16),
wherein the connector interface (16) is configured to be connected to at least one external electronic device (14) associated with an identification chip (24) with configuration information and/or identification information,
wherein the connector interface (16) comprises an information signal line (28) being configured to receive the configuration information and/or identification information,
wherein the connector interface (16) is configured to forward the configuration information and/or identification information received to the control module (18),
wherein the control module (18) is configured to evaluate the configuration information and/or the identification information received, and
wherein the control module (18) is configured to set communication parameters of the electronic communication device (12) automatically based on the configuration information and/or the identification information evaluated,
wherein the information signal line (28) is a dedicated signal line that is used by the electronic communication device (12) only for communication with the identification chip (24).

2. The electronic communication device according to claim 1, **characterized in that** the electronic communication device is established as a handheld radio.

3. The electronic communication device according to any of the preceding claims, **characterized in that** the connector interface (16) comprises an additional reference connection (30), wherein the additional reference connection (30) provides a potential reference for the information signal line (28).

4. The electronic communication device according to any of the preceding claims, **characterized in that** the control module (18) comprises an artificial intelligence module, wherein the artificial intelligence module is configured to determine the communication parameters based on the configuration information and/or identification information.

5. The electronic communication device according to any of the preceding claims, **characterized in that** the control module (18) comprises a memory (32), wherein the configuration information being associated with the external electronic device (14) is stored in the memory at least partially, particularly completely.

6. The electronic communication device according to any of the preceding claims, **characterized in that** the configuration information and/or the identification information is static.

7. The electronic communication device according to any of the preceding claims, **characterized in that** the configuration information and/or the identification information is digital.

8. The electronic communication device according to any of the preceding claims, **characterized in that** the configuration information comprises a communication protocol, an amplification factor, a voltage requirement, logical parameters, a microphone gain, a speaker gain, an internal speaker state, a push-to-talk setting, a USB setting and/or a last state of use.

9. The electronic communication device according to any of the preceding claims, **characterized in that** the configuration information and/or the identification information is saved on the identification chip in the Java Script Object Notation, JSON, format.

10. The electronic communication device according to any of the preceding claims, **characterized in that** the configuration information and/or the identification information is at least partially saved in clear text.

11. The electronic communication device according to any of the preceding claims, **characterized in that** security-relevant configuration information and/or security-relevant identification information are/is stored in a dedicated memory portion of a memory of the identification chip (24).

12. The electronic communication device according to any of the preceding claims, **characterized in that** the configuration information and/or the identification information are/is validated by means of a check sum and/or by means of an electronic signature.

13. The electronic communication device according to any of the preceding claims, **characterized in that** the control module (18) is configured to write configuration information and/or identification information onto the identification chip (24).

14. An electronic communication system, comprising an electronic communication device (12) according to any of the preceding claims, and an external electronic device (14) being connected to the connector interface (16) of the electronic communication device (12) by means of at least one cable (22),
wherein the at least one cable (22) and/or the external electronic device (14) comprises an identification chip (24), and
wherein the identification chip (24) comprises configuration information and/or identification information being associated with the external electronic device (14).

15. The electronic communication system according to claim 14, wherein the electronic communication device (12) is the only master device.

## Patentansprüche

1. Elektronische Kommunikationsvorrichtung für eine Funkkommunikation, wobei die elektronische Kommunikationsvorrichtung (12) ein Steuermodul (18) und eine Verbinderschnittstelle (16) umfasst,
wobei die Verbinderschnittstelle (16) konfiguriert ist, um mit mindestens einer externen elektronischen Vorrichtung (14) verbunden zu werden, die einem Identifikationschip (24) mit Konfigurationsinformationen und/oder Identifikationsinformationen zugeordnet ist,
wobei die Verbinderschnittstelle (16) eine Informationssignalleitung (28) umfasst, die konfiguriert ist, um die Konfigurationsinformationen und/oder die Identifikationsinformationen zu empfangen,
wobei die Verbinderschnittstelle (16) konfiguriert ist, um die empfangenen Konfigurationsinformationen und/oder Identifikationsinformationen an das Steuermodul (18) weiterzuleiten,
wobei das Steuermodul (18) konfiguriert ist, um die empfangenen Konfigurationsinformationen und/oder Identifikationsinformationen auszuwerten, und
wobei das Steuermodul (18) konfiguriert ist, um Kommunikationsparameter der elektronischen Kommunikationsvorrichtung (12) automatisch basierend auf den ausgewerteten Konfigurationsinformationen und/oder Identifikationsinformationen einzustellen,
wobei die Informationssignalleitung (28) eine dedizierte Signalleitung ist, die durch die elektronische Kommunikationsvorrichtung (12) nur für eine Kommunikation mit dem Identifikationschip (24) verwendet wird.

2. Elektronische Kommunikationsvorrichtung nach Anspruch 1,
**dadurch gekennzeichnet, dass** die elektronische Kommunikationsvorrichtung als ein Handfunkgerät eingerichtet ist.

3. Elektronische Kommunikationsvorrichtung nach einem der vorstehenden Ansprüche, **dadurch gekennzeichnet, dass** die Verbinderschnittstelle (16) eine zusätzliche Referenzverbindung (30) umfasst, wobei die zusätzliche Referenzverbindung (30) eine potenzielle Referenz für die Informationssignalleitung (28) bereitstellt.

4. Elektronische Kommunikationsvorrichtung nach einem der vorstehenden Ansprüche, **dadurch gekennzeichnet, dass** das Steuermodul (18) ein Modul für künstliche Intelligenz umfasst, wobei das Modul für künstliche Intelligenz konfiguriert ist, um die Kommunikationsparameter basierend auf den Konfigurationsinformationen und/oder den Identifikationsinformationen zu bestimmen.

5. Elektronische Kommunikationsvorrichtung nach einem der vorstehenden Ansprüche, **dadurch gekennzeichnet, dass** das Steuermodul (18) einen Speicher (32) umfasst, wobei die Konfigurationsinformationen, die der externen elektronischen Vorrichtung (14) zugeordnet sind, in dem Speicher mindestens teilweise, insbesondere vollständig, gespeichert sind.

6. Elektronische Kommunikationsvorrichtung nach einem der vorstehenden Ansprüche, **dadurch gekennzeichnet, dass** die Konfigurationsinformationen und/oder die Identifikationsinformationen statisch sind.

7. Elektronische Kommunikationsvorrichtung nach einem der vorstehenden Ansprüche, **dadurch gekennzeichnet, dass** die Konfigurationsinformationen und/oder die Identifikationsinformationen digital sind.

8. Elektronische Kommunikationsvorrichtung nach einem der vorstehenden Ansprüche, **dadurch gekennzeichnet, dass** die Konfigurationsinformationen ein Kommunikationsprotokoll, einen Verstärkungsfaktor, einen Spannungsbedarf, logische Parameter, eine Mikrofonverstärkung, eine Lautsprecherverstärkung, einen internen Lautsprecherzustand, eine Push-To-Talk-Einstellung, eine USB-Einstellung und/oder einen letzten Nutzungszustand umfassen.

9. Elektronische Kommunikationsvorrichtung nach einem der vorstehenden Ansprüche, **dadurch gekennzeichnet, dass** die Konfigurationsinformationen und/oder die Identifikationsinformationen auf dem Identifikationschip in dem Java Script Object Notation-Format, JSON-Format, gespeichert sind.

10. Elektronische Kommunikationsvorrichtung nach einem der vorstehenden Ansprüche, **dadurch gekennzeichnet, dass** die Konfigurationsinformationen und/oder die Identifikationsinformationen mindestens teilweise in Klartext gespeichert sind.

11. Elektronische Kommunikationsvorrichtung nach einem der vorstehenden Ansprüche, **dadurch gekennzeichnet, dass** sicherheitsrelevante Konfigurationsinformationen und/oder sicherheitsrelevante Identifikationsinformationen in einem dedizierten Speicherabschnitt eines Speichers des Identifikationschips (24) gespeichert sind.

12. Elektronische Kommunikationsvorrichtung nach einem der vorstehenden Ansprüche, **dadurch gekennzeichnet, dass** die Konfigurationsinformationen und/oder die Identifikationsinformationen mittels einer Prüfsumme und/oder mittels einer elektronischen Signatur validiert werden.

13. Elektronische Kommunikationsvorrichtung nach einem der vorstehenden Ansprüche, **dadurch gekennzeichnet, dass** das Steuermodul (18) konfiguriert ist, um Konfigurationsinformationen und/oder Identifikationsinformationen auf den Identifikationschip (24) zu schreiben.

14. Elektronisches Kommunikationssystem, umfassend eine elektronische Kommunikationsvorrichtung (12) nach einem der vorstehenden Ansprüche und eine externe elektronische Vorrichtung (14), die mit der Verbinderschnittstelle (16) der elektronischen Kommunikationsvorrichtung (12) mittels mindestens eines Kabels (22) verbunden ist,
wobei das mindestens eine Kabel (22) und/oder die externe elektronische Vorrichtung (14) einen Identifikationschip (24) umfasst, und
wobei der Identifikationschip (24) Konfigurationsinformationen und/oder Identifikationsinformationen umfasst, die der externen elektronischen Vorrichtung (14) zugeordnet sind.

15. Elektronisches Kommunikationssystem nach Anspruch 14, wobei die elektronische Kommunikationsvorrichtung (12) die einzige Master-Vorrichtung ist.

## Revendications

1. Dispositif de communication électronique pour une communication radio, dans lequel le dispositif de communication électronique (12) comprend un module de commande (18) et une interface de connecteur (16),
dans lequel l'interface de connecteur (16) est configurée pour être connectée à au moins un dispositif électronique externe (14) associé à une puce d'identification (24) contenant des informations de configuration et/ou des informations d'identification,
dans lequel l'interface de connecteur (16) comprend une ligne de signal d'informations (28) configurée pour recevoir les informations de configuration et/ou les informations d'identification,
dans lequel l'interface de connecteur (16) est configurée pour transmettre les informations de configuration et/ou les informations d'identification reçues au module de commande (18),
dans lequel le module de commande (18) est configuré pour évaluer les informations de configuration et/ou les informations d'identification reçues, et
dans lequel le module de commande (18) est configuré pour régler automatiquement des paramètres de communication du dispositif de communication électronique (12) sur la base des informations de configuration et/ou des informations d'identification évaluées,
dans lequel la ligne de signal d'informations (28) est une ligne de signal dédiée qui est utilisée par le dispositif de communication électronique (12) uniquement pour une communication avec la puce d'identification (24).

2. Dispositif de communication électronique selon la revendication 1,
**caractérisé en ce que** le dispositif de communication électronique est établi comme une radio portative.

3. Dispositif de communication électronique selon l'une quelconque des revendications précédentes, **caractérisé en ce que** l'interface de connecteur (16) comprend une connexion de référence supplémentaire (30), dans lequel la connexion de référence supplémentaire (30) fournit une référence potentielle pour la ligne de signal d'informations (28).

4. Dispositif de communication électronique selon l'une quelconque des revendications précédentes, **caractérisé en ce que** le module de commande (18) comprend un module d'intelligence artificielle, dans lequel le module d'intelligence artificielle est configuré pour déterminer les paramètres de communication sur la base des informations de configuration et/ou des informations d'identification.

5. Dispositif de communication électronique selon l'une quelconque des revendications précédentes, **caractérisé en ce que** le module de commande (18) comprend une mémoire (32), dans lequel les informations de configuration associées au dispositif électronique externe (14) sont stockées dans la mémoire au moins partiellement, en particulier complètement.

6. Dispositif de communication électronique selon l'une quelconque des revendications précédentes, **caractérisé en ce que** les informations de configuration et/ou les informations d'identification sont statiques.

7. Dispositif de communication électronique selon l'une quelconque des revendications précédentes, **caractérisé en ce que** les informations de configuration et/ou les informations d'identification sont numériques.

8. Dispositif de communication électronique selon l'une quelconque des revendications précédentes, **caractérisé en ce que** les informations de configuration comprennent un protocole de communication, un facteur d'amplification, une tension requise, des paramètres logiques, un gain de microphone, un gain de haut-parleur, un état du haut-parleur interne, un réglage de messagerie vocale instantanée, un réglage USB et/ou un dernier état d'utilisation.

9. Dispositif de communication électronique selon l'une quelconque des revendications précédentes, **caractérisé en ce que** les informations de configuration et/ou les informations d'identification sont enregistrées sur la puce d'identification au format de notation objet issue de JavaScript, JSON.

10. Dispositif de communication électronique selon l'une quelconque des revendications précédentes, **caractérisé en ce que** les informations de configuration et/ou les informations d'identification sont au moins partiellement enregistrées en texte en clair.

11. Dispositif de communication électronique selon l'une quelconque des revendications précédentes, **caractérisé en ce que** des informations de configuration relatives à la sécurité et/ou des informations d'identification relatives à la sécurité sont stockées dans une partie de mémoire dédiée de la puce d'identification (24).

12. Dispositif de communication électronique selon l'une quelconque des revendications précédentes, **caractérisé en ce que** les informations de configuration et/ou les informations d'identification sont validées au moyen d'une somme de contrôle et/ou au moyen d'une signature électronique.

13. Dispositif de communication électronique selon l'une quelconque des revendications précédentes, **caractérisé en ce que** le module de commande (18) est configuré pour écrire des informations de configuration et/ou des informations d'identification sur la puce d'identification (24).

14. Système de communication électronique, comprenant un dispositif de communication électronique (12) selon l'une quelconque des revendications précédentes, et un dispositif électronique externe (14) connecté à l'interface de connecteur (16) du dispositif de communication électronique (12) au moyen d'au moins un câble (22),
dans lequel l'au moins un câble (22) et/ou le dispositif électronique externe (14) comprend une puce d'identification (24), et
dans lequel la puce d'identification (24) comprend des informations de configuration et/ou des informations d'identification associées au dispositif électronique externe (14).

15. Système de communication électronique selon la revendication 14, dans lequel le dispositif de communication électronique (12) est le seul dispositif maître.
